# EUROPEAN PATENT SPECIFICATION

(11) **EP 1 681 857 B1**
(45) Date of publication and mention of the grant of the patent: **20.02.2008**
(21) Application number: 05112215.8
(22) Date of filing: 15.12.2005
(51) Int. Cl.: H04N 5/38

(54) **Device and method for retransmitting digital channels transmitted at specific frequencies within a spectral zone common to the transmission of analogue channels**
Vorrichtung und Verfahren zur Wiederübertragung von digitalen Kanälen, die auf bestimmten Frequenzen innerhalb einer für die Übertragung analogen Kanäle gemeinsamen spektralen Zone übertragen wurden
Dispositif et procédé de réémission de canaux numériques émis à des fréquences déterminées au sein d'une zone spectrale commune à l'émission de canaux analogiques

(30) Priority: 14.01.2005 FR 0550126
(43) Date of publication of application: 19.07.2006
(73) Proprietor: Thomson Licensing, 92100 Boulogne-Billancourt (FR)
(72) Inventor: Robert, Jean-Luc, 35830 Betton (FR); Le Naour, Jean-Yves, 35740 Pace (FR); Pintos, Jean-Francois, 35230 Bourgbarre (FR)
(74) Representative: Ruellan-Lemonnier, Brigitte

(56) References cited:
- FR-A- 2 697 699
- FR-A- 2 826 223
- FR-A- 2 849 734
- GB-A- 2 401 499
- US-A1- 2002 039 393
- PATENT ABSTRACTS OF JAPAN vol. 2002, no. 08, 5 August 2002 (2002-08-05) & JP 2002 101032 A (MASPRO DENKOH CORP), 5 April 2002 (2002-04-05)

## Description

The present invention relates to a device for retransmitting digital channels transmitted at specific frequencies within a spectral zone common to the transmission of analogue channels.

The present invention therefore falls within the scope of the deployment of the digital terrestrial television network. Owing to the modulations used, this deployment recommended by the competent organisations will provide subscribers with access to a better offer of audiovisual programmes than the current analogue network. Hence the digitisation of the television network is a major industrial issue as the eventual suppression of analogue broadcasting will simultaneously optimise the spectrum and give the subscriber access to a much greater offer of programmes than that of the current network. However, the transition from analogue to digital is planned to be implemented gradually. This involves the cohabitation of the analogue and digital channels.

The OFDM (Orthogonal Frequency Division Multiplexing) multi-carrier modulation compliant with the DVB-T (Digital Video Broadcast Terrestrial) standard, chosen for broadcasting digital channels, enables the use of analogue prohibited channels, owing to its outside useful channel protection. Hence it is possible to broadcast digital channels on frequencies adjacent to those used for analogue broadcasting and by using the existing infrastructures for analogue transmission.

However, despite the robustness of this modulation, particularly in relation to the multipaths, measurement campaigns have highlighted reception problems in a portable reception context. Hence, within the context of digital terrestrial television, it is advisable to offer a portable reception coverage at least equivalent to the coverage offered for analogue. In contrast with analogue reception where the picture can be received degraded but always visible, the threshold effect encountered in the digital field means that either a perfect picture or no picture at all is obtained. This makes it more complex to improve the digital portable reception coverage. The successful launch of digital television therefore relies on technical solutions enabling not only a good quality reception for a subscriber having a roof antenna but also for all the portable reception configurations.

There are several approaches to allow an increase in the portable reception coverage, including a very robust broadcast resulting in a high consumption of useful throughput, an increase of at least 10 times in the transmission power, a densification of the structure of the network by multiplying the transmitters, a local isofrequency retransmission of low power at the level of a town, a neighbourhood, a building or a dwelling. It is also possible to improve the quality of portable receiver antennas, which penalises subscribers, who will have to pay more for them or use domestic retransmission devices known as "gap fillers".

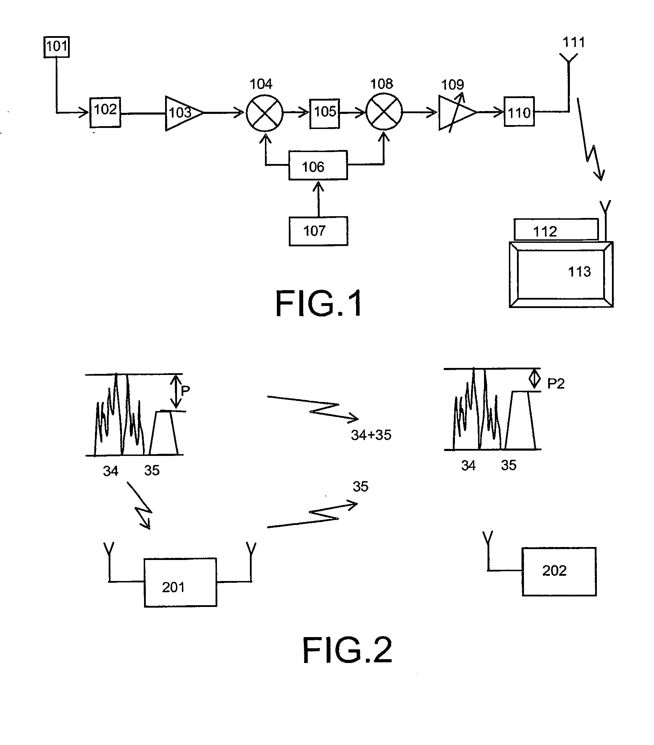

Figure 1 shows a retransmission device according to the prior art. This device has a standard architecture for realising an isofrequency retransmission of the ultra high frequency channels (traditionally 470/862 MHz) received by the roof antenna 101 in the indoor environment In relation to a retransmission device realising the amplification of the entire UHF band, selective retransmission has the advantage of not leading to destructive echoes for analogue reception, or intermodulation. The isofrequency retransmission device includes a first ultra high frequency filter 102, an amplifier 103, a digital channel selection device constituted by a double change of frequency (104, 106, 107, 108) and surface wave type filter (SAW, Surface Acoustic Wave) 105. The retransmission is realised by an amplifier 109, coupled to a filter 110 and a small ultra high frequency antenna 111. The retransmitted signals are sent to a television set 113 and/or a Set Top Box unit 112. This therefore involves a single channel amplification with the channel being chosen dynamically by the viewer. When changing channels, a command is sent to the domestic retransmitter, which then locks onto the frequency of the new channel and amplifies this channel. To do this, a radiofrequency remote control is required as the standard infrared remote controls only operate in direct view and the television set may not necessarily be in the same room. This characteristic can prove to be penalising in terms of cost and workability. Such a retransmission device has the major disadvantage of allowing only one multiplex to be received at a time. Indeed, the authorities governing digital terrestrial television (CSA in France) have decided to distribute the potential channels, namely around thirty, over 6 separate multiplexes. Each multiplex is contained within a digital channel of 8 MHz bandwidth. It therefore appears that changing any channel from one multiplex to another requires the viewer to perform an operation via the retransmission device. This is impractical and inconvenient It is also noted that when there are several items of portable reception equipment in the dwelling, as many retransmitters are required. This creates extra cost.

For economic reasons, so as not to redesign the infrastructure of already existing transmitters, the planning of the frequencies enabling the deployment of digital terrestrial television is planned in the frequency zones already used for analogue. The result is that the choice of frequencies adopted for the six digital multiplexes is implemented on the "taboo" analogue channels, that is the adjacent channels n+1/n-1 or n+4/n-4. The technical consequence of such a choice is that it imposes particularly severe protection criteria between analogue channels and adjacent digital channels.

Document FR-A-2 849 734 5 THOMSON LICENCING S.A. discloses a receiving system comprising a re-transmitter for amplifying signals and re transmitting the channels whose positions can be unspecified in the reception band.Hence, for a device that retransmits the isofrequency digital channels within the domestic environment as shown in figure 1, there is a strong risk of modifying the relative power between analogue and digital channels received at the level of the user as shown in figure 2. Indeed, in this figure given as an example, the portable antenna of a television set 202 simultaneously receives the signals of adjacent channels 34 and 35, 34 being an analogue signal and 35 a digital signal. These signals are attenuated by the domestic environment but allocated with the protection ratio of P dB imposed by the operator. The retransmission by the isofrequency retransmission device 201 of the digital channel 35 leads to a simultaneous reception of the amplified channel 35 which modifies the protection ratio, noted as P2 on figure 2. This may create interference on the lower analogue channel 34. Moreover, in such a context it is necessary to provide significant isolation between the reception and transmission antennas of the isofrequency retransmitter 201, which increases the cost of this solution.

The present invention proposes to remedy the disadvantages encountered with the retransmission devices according to the prior art.

The present invention relates to a retransmission device including an automatic detection module of digital channels, an automatic search module on this spectral zone, of a spectral zone free from analogue channels, called free spectral zone, the size of this free spectral zone corresponding to that of a group of several digital channels, a frequency grouping module for frequency grouping the detected digital channels and a retransmission module of this group of detected digital channels for retransmitting this group of digital channels in the free spectral zone.

Indeed, by grouping the frequencies together and by retransmitting them in a spectral zone free from any analogue channel, or even any digital channel, the invention makes possible the retransmission after amplification of the digital channels of the frequency zones used by the analogue channels. The amplification of the digital channels thus becomes harmless for the analogue channels.

In one embodiment, the digital channels are multiplexes.

In one embodiment, the group of several digital channels includes all of the digital channels detected in the spectral zone.

In one embodiment, the free spectral zone sought is free of any digital channel.

In one embodiment, the automatic search module for the free spectral zone implements a counter increasing, in the absence of detected channels, during the automatic detection of digital channels and resetting to zero when a channel is detected, the said spectral zone being found when the counter has reached a preset value.

The present invention also relates to a method for retransmitting digital channels transmitted at specific frequencies within a spectral zone common to the transmission of analogue channels. This method according to the invention includes a step for automatically detecting digital channels, an automatic search step, on this spectral zone, of a spectral zone free from analogue channels, called free spectral zone, the size of this free spectral zone corresponding to that of a group of several digital channels, a frequency grouping step for frequency grouping the detected digital channels and retransmission step of this group of detected digital channels for retransmitting this group of digital channels in the free spectral zone.

Other characteristics and advantages of the present invention will emerge on reading the description of different embodiments, the description being made with reference to the annexed drawings wherein:
Fig. 1 is a diagram of a retransmission device according to prior art.
Fig. 2 illustrates the interference of analogue channels observed with a device according to Figure 1.
Fig. 3 is a diagram of a retransmission device according to the invention.
Fig. 4 shows an intermediate frequency filtering as implemented in a frequency grouping module according to the invention.
Fig. 5a and 5b respectively show the implementations of the invention on the transmission spectral zones of television channels for Rennes and Nantes.
Fig. 6a shows the spectral distribution of the different signals and filters used.
Fig. 6b shows an implementation of the frequency group and the retransmission according to the invention.

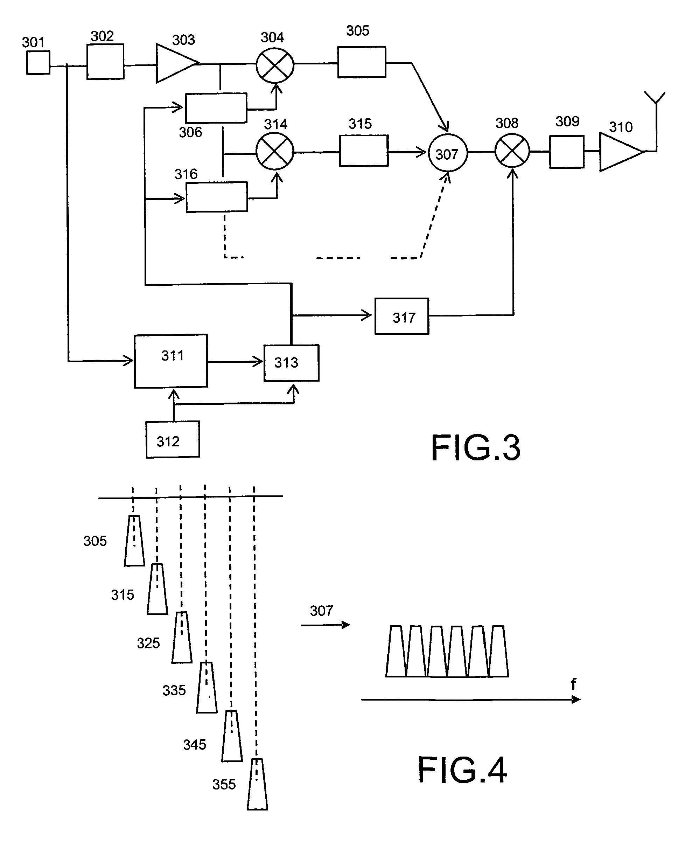

Figure 3 shows a device according to the invention. This device, and the retransmission method that it uses, overcomes the major constraints caused by an isofrequency type retransmission. The principle of the device according to the invention is based on a frequency grouping of a plurality of received digital multiplexes, for example every six multiplexes together, and the retransmission of the multi-carrier signal thus constituted in a free spectral zone of the ultra high frequency spectrum. This free spectral zone is determined automatically through the scanning and memorising of the frequencies. Hence, the device according to the invention is connected to an antenna 301, for example by a roof antenna socket, to receive the analogue and digital channels in the ultra high frequency spectrum, or spectral zone. The use of a roof antenna enables the correct reception of the signals before retransmission. The device traditionally includes a first filter 302 and a first low noise amplifier 303 covering the entire spectral zone. In parallel, the device according to the invention includes a module 311 for automatically detecting digital channels on the spectrum, a module 313 for memorising the frequencies of these digital channels. It also includes an automatic search module, for example a microprocessor 312, searching the said spectral zone for a spectral zone free from analogue channels, called free spectral zone. According to the invention, the size of the free spectral zone sought must correspond to the size of a group of several digital channels. The received signal, constituted by both digital and analogue channels after filtering and low noise amplification, is sent to a frequency grouping module 3x4, 3x5, 3x6 (x ranging from 0 to the multiplex number minus one). This frequency grouping module is advantageously constituted by as many frequency transposition channels, 3x4, 3x5, 3x6, x ranging from 0 to the multiplex number minus one, as there are multiplexes found. These transposition channels are identical and each controlled according to a different frequency, the said different frequency depending on the frequencies of the digital channels memorised in the memorisation module 313 and depending on the spectral zone into which the channels are required to be transposed. Thus, following the scanning of the spectral zone, the local oscillators 3x6 belonging to the transposition channels, are controlled by a microprocessor 312. A 3-wire bus can be conveniently used to carry this command. Mixers 3x4 realise the transposition of the channel frequencies. The intermediate frequency filters 3x5 of the transposition channels eliminate the adjacent analogue channels and the intermediate frequency signal frequencies are selected offset by 8 MHz as shown in figure 4.

A module 307 sums these intermediate frequency signals so as to generate a multi-carrier signal as shown in figure 4. This mufti-carrier signal, for example placed at a frequency not included in the spectral zone used for transmitting the television channels, is transposed in the free spectral zone. This transposition is realised using a mixer 308 controlled by a frequency produced by a synthetizer 317 controlled such that the multi-carrier signal is transposed into the free spectral zone. Traditionally, the signal then goes trough a fitter 309 then an amplifier 310 before being retransmitted by the antenna of the retransmission device.

The frequency grouping module therefore groups a set of technical elements 307, 308, 317, 309, 310 that group the signals into one mulfi-camer signal and transpose this signal into the free spectral zone in order to retransmit it.

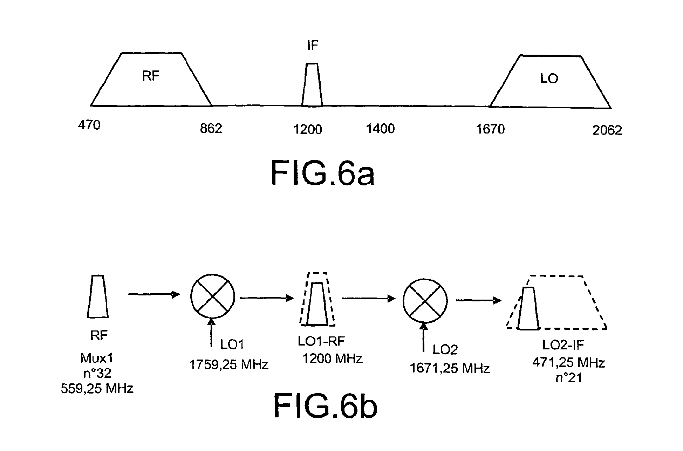

Practically, the microprocessor advantageously controls the different modules implemented. As shown in figures 6a and 6b, in the practical case where six multiplexes are received in an RF spectral zone, the operating mode comprises a step that automatically detects the six digital multiplexes received in this RF spectral zone thanks to a scanning aided by the microprocessor, a step that memorises the frequencies of these multiplexes, a search step by the microprocessor of a contiguous free spectral zone of 50 MHz (where 6 multiplexes are required to be grouped together), and advantageously, a step for memorising the minimum frequency of this free spectral zone. The search function of a free zone can be achieved by counting. Knowing the scanning step, the absence of a carrier is detected for a scan duration of 50 MHz drift. If a carrier is detected before this duration, a counter is reset. For each reset, for example, the corresponding frequency of the detection phase is memorised. This is the minimum frequency of the free spectral zone. It can be envisaged that the free spectral zone is free from any analogue channel or that the free spectral zone is free of any transmission channel, including digital channels. In the first case, it is necessary for the microprocessor to give the command that the digital channel(s) detected in the free spectral zone is(are) retransmitted in an isofrequency manner by distributing the other digital channels on the other frequencies of the free spectral zone.

Next, as shown in figure 6b, the retransmission device realises a programming step of the transposition oscillators controlled at frequencies LO1 included in a spectral zone LO transposing the six multiplexes to intermediate frequencies IF, then a multi-carrier signal generation step constituted by the six multiplexes regrouped by the choice of intermediate frequency surface wave fitters respectively offset by 8 MHz, then a programming step at a frequency LO2, via the microprocessor, of a transposition oscillator supplying the multi-carrier signal generated in the free spectral zone previously determined in the RF spectral zone. This last step uses the minimum frequency of the free spectral zone memorised during the scanning. The signal is finally filtered, amplified and transmitted. The multi-carrier signal is thus translated in a zone of non-interference of the ultra high frequency band. It is noted that the choice of local oscillators at a frequency greater than the RF advantageously eliminates the image frequencies that are naturally filtered by the output filter 309.

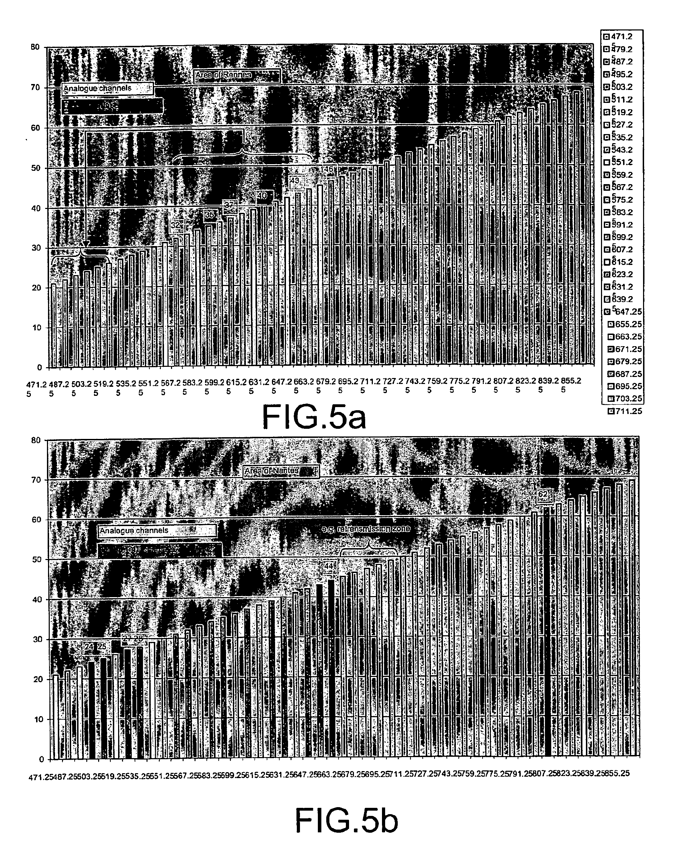

Figure 6b particularly shows the digital case of a digital channel Mux1 found on channel no. 32 of the UHF band in the region of Rennes (see figure 5a). Mux 1 has a frequency of 559.25 MHz. In order to transpose this intermediate frequency channel IF where the multi-carrier signal is generated and imposed at 1200 MHz, a mixer is supplied at a frequency LO1 of 1759.25 MHz. Next, in order to transpose the channel in the free spectral zone beginning at 471.25 MHz (see figure 5a), another mixer is supplied at a frequency LO2 of 1671.25 MHz. The channel is thus retransmitted at the frequency of 471.25 MHz in the channel no. 21. It is clearly noted that the image frequencies are sent outside of the UHF band at LO1+RF=2959.25 MHz and at LO2+IF= 2871.25 MHz.

This operating mode occurs automatically in the retransmission device according to the invention so well that for the user, only an initialisation phase is necessary. This phase involves scanning the spectrum by the receiver and/or the decoder in the presence of transmission of the retransmitter and memorising the multiplexed channels retransmitted. This phase is realised once only when starting up the receiver and/or decoder as is traditionally the case for the analogue channels. The reception is obtained, for example, with a miniature monopole type antenna.

Thus, the invention proposes a simple solution in an environment traditionally including a roof antenna. It simply implements an automatic detection of digital channels according to the geographical zone, an automatic search for a spectral zone free from analogue channels, the frequency grouping of the digital channels detected and their retransmission in the free spectral zone. It is noted that a single retransmission device is required for an environment comprising various receivers.

On the receiver side, this device does not require the use of a remote control. Indeed, the use of such a device involves only one initialisation phase for each of the receivers present in the environment of the retransmission device. During this initialisation phase, each of the receivers stores the frequencies of the digital channels. It is also noted that such a retransmission device enables the user of a receiver, notably a portable one, to be able to display and record different channels, it can also display several programmes coming from different channels at the same time (for example, in a picture-in-picture context).

Advantageously, in the specific but probable case in which the retransmission device is used in a domestic environment of the apartment type, the following must be avoided; firstly, interference from a nearby retransmission device and secondly, the impossibility of finding a free spectral zone if several retransmission devices are already set in the neighbouring area. The invention thus envisages the implementation of a module for detecting the consecutive presence of several digital channels during the automatic detection phase. If this condition is provided, then the minimum frequency of the free zone is obligatorily locked on the first of these channels. This enables several neighbouring retransmission devices to operate correctly, the use of the COFDM modulation used also permitting echoes to be less penalising.

Figures 5a and 5b give practical illustrations of the operation of the invention on the Rennes and Nantes transmitters. These figures present the frequency distribution of the analogue and digital channels as well as the free spectral zones on which a multi-carrier signal as generated according to the invention can be retransmitted.

Advantageously, in the specific case where it is not possible to find a free spectral zone enabling all the digital multiplexes to be grouped together, it is useful to plan to split the spectral zone into two or more zones. For example, in some geographical areas, two free spectral zones of 30 MHz will be available but not one zone of 50 MHz. It will then be necessary to plan for a summation 307 of the signals that generate two multi-carrier signals each sent on two transposition oscillators subject to separate transposition frequencies.

The invention is not limited to the embodiments described and those skilled in the art will recognise the existence of diverse variants of the invention.

## Claims

1. Device for retransmitting digital channels transmitted at specific frequencies within a spectral zone common to the transmission of analogue channels, **characterized in that** it includes an automatic detection module (311) of digital channels, an automatic search module (312), on the said spectral zone, of a spectral zone free from analogue channels, called free spectral zone, the size of the said free spectral zone corresponding to that of a group of several digital channels, a frequency grouping module (307) for frequency grouping the detected digital channels and a retransmission module (308, 317, 309, 310) of the said group of detected digital channels for retransmitting said group of digital channels in the free spectral zone.

2. Device according to claim 1, in which the digital channels are multiplexes.

3. Device according to one of claims 1 and 2, in which the group of several digital channels comprises all the digital channels detected in the spectral zone.

4. Device according to one of the aforementioned claims, in which the sought free spectral zone is free from any digital channel.

5. Device according to one of the aforementioned claims, in which the automatic search module of the free spectral zone implements a counter increasing, in the absence of detected channels, during the automatic detection of digital channels and resetting to zero when a channel is detected, the said spectral zone being found when the counter has reached a preset value.

6. Method for retransmitting digital channels transmitted at specific frequencies within a spectral zone common to the transmission of analogue channels, **characterized in that** it includes an automatic detection step of digital channels, an automatic search step, on the said spectral zone, of a spectral zone free from analogue channels, called free spectral zone, the size of the said free spectral zone corresponding to that of a group of several digital channels, a frequency grouping step for frequency grouping the detected digital channels and retransmission step of the said group of detected digital channels for retransmitting said group of digital channels in the free spectral zone.

## Patentansprüche

1. Vorrichtung zur Wiederübertragung von digitalen Kanälen, die auf bestimmten Frequenzen innerhalb eines für die Übertragung von analogen Kanälen gemeinsamen Spektralbereichs übertragen wurden, **dadurch gekennzeichnet, dass** sie Folgendes beinhaltet: ein Modul für die automatische Erkennung (311) von digitalen Kanälen, ein Modul für die automatische Suche (312) in diesem Spektralbereich nach einem Spektralbereich, der frei ist von analogen Kanälen und als freier Spektralbereich bezeichnet wird, wobei die Größe dieses freien Spektralbereichs der Größe einer Gruppe aus mehreren digitalen Kanälen entspricht, ein Modul zum Gruppieren von Frequenzen (307), um die erkannten digitalen Kanäle nach Frequenzen zu gruppieren, sowie ein Modul zur Wiederübertragung (308, 317, 309, 310) dieser Gruppe von erkannten digitalen Kanälen, um diese Gruppe von digitalen Kanälen in dem freien Spektralbereich neu zu übertragen.

2. Vorrichtung gemäß Anspruch 1, wobei die digitalen Kanäle Multiplexe sind.

3. Vorrichtung gemäß einem der Ansprüche 1 und 2, wobei die Gruppe aus mehreren digitalen Kanälen sämtliche in dem Spektralbereich erkannten Kanäle umfasst.

4. Vorrichtung gemäß einem der vorstehenden Ansprüche, wobei der gesuchte freie Spektralbereich frei von jeglichen digitalen Kanälen ist.

5. Vorrichtung gemäß einem der vorstehenden Ansprüche, wobei das Modul für die automatische Suche nach dem freien Spektralbereich während einer automatischen Erkennung von digitalen Kanälen eine Zählererhöhung implementiert, wenn kein Kanal erkannt wird, sowie eine Rückstellung auf Null, wenn ein Kanal erkannt wird, wobei der Spektralbereich gefunden ist, wenn der Zähler einen voreingestellten Wert erreicht hat.

6. Verfahren zur Wiederübertragung von digitalen Kanälen, die auf bestimmten Frequenzen innerhalb eines für die Übertragung von analogen Kanälen gemeinsamen Spektralbereichs übertragen wurden, **dadurch gekennzeichnet, dass** es Folgendes beinhaltet: einen Schritt zum automatischen Erkennen von digitalen Kanälen, einen Schritt für die automatische Suche in diesem Spektralbereich nach einem Spektralbereich, der frei ist von analogen Kanälen und als freier Spektralbereich bezeichnet wird, wobei die Größe dieses freien Spektralbereichs der Größe einer Gruppe aus mehreren digitalen Kanälen entspricht, einen Schritt zum Gruppieren von Frequenzen, um die erkannten digitalen Kanäle nach Frequenzen zu gruppieren, sowie einen Schritt zur Wiederübertragung dieser Gruppe von erkannten digitalen Kanälen, um diese Gruppe von digitalen Kanälen in dem freien Spektralbereich neu zu übertragen.

## Revendications

1. Dispositif de réémission de canaux numériques émis à des fréquences déterminées au sein d'une zone spectrale commune à l'émission de canaux analogiques, **caractérisé en ce qu'**il inclut un module de détection automatique (311) de canaux numériques, un module de recherche automatique (312), sur ladite zone spectrale, d'une zone spectrale libre de canaux analogiques, dite zone spectrale libre, la taille de la dite zone spectrale libre correspondant à celle d'un ensemble de plusieurs canaux numériques, un module de regroupement fréquentiel (307, 308, 317, 309, 310) pour regrouper fréquentiellement les canaux numériques détectés et un module de réémission dudit ensemble de canaux numériques détectés pour réemettre ledit ensemble de canaux numériques dans la zone spectrale libre.

2. Dispositif selon la revendication 1, dans lequel les canaux numériques sont des multiplex.

3. Dispositif selon l'une des revendications 1 et 2, dans lequel l'ensemble de plusieurs canaux numériques comprend la totalité des canaux numériques détectés dans la zone spectrale.

4. Dispositif selon l'une des revendications précédentes, dans lequel la zone spectrale libre recherchée est libre de tout canal numérique.

5. Dispositif selon l'une des revendications précédentes, dans lequel le module de recherche automatique de la zone spectrale libre met en oeuvre un compteur s'incrémentant, en l'absence de canaux détectés, durant la détection automatique des canaux numériques et s'initialisant à zéro quand un canal est détecté, ladite zone spectrale étant trouvée lorsque le compteur atteint une valeur prédéterminée.

6. Procédé de réémission de canaux numériques émis à des fréquences déterminées au sein d'une zone spectrale commune à l'émission de canaux analogiques, **caractérisé en ce qu'**il inclut une étape de détection automatique de canaux numériques, une étape de recherche automatique, sur ladite zone spectrale, d'une zone spectrale libre de canaux analogiques, dite zone spectrale libre, la taille de la dite zone spectrale libre correspondant à celle d'un ensemble de plusieurs canaux numériques, une étape de regroupement fréquentiel pour regrouper fréquentiellement les canaux numériques détectés et une étape de réémission dudit ensemble de canaux numériques pour retransmettre ledit groupe de canaux numériques dans la zone spectrale libre.
